# FASCICULE DE BREVET EUROPEEN

(11) **EP 1 892 152 B1**
(45) Date de publication et mention de la délivrance du brevet: **09.03.2011**
(21) Numéro de dépôt: 07301319.5
(22) Date de dépôt: 22.08.2007
(51) Int. Cl.: B60R 5/04

(54) **Panneau destiné à couvrir l'espace entre un dossier de siège arrière et un dispositif de recouvrement de compartiment à bagages, et un système cache bagage comprenant un tel panneau**
Paneel zur Abdeckung des Zwischenraums zwischen der Lehne eines Rücksitzes und einer Verkleidungsvorrichtung des Kofferraums und Gepäckabdeckungssystem, das ein solches Paneel umfasst
Panel intended to cover the space between the backrest of a back seat and a device for covering the luggage compartment, and baggage concealing system comprising such a panel

(30) Priorité: 24.08.2006 FR 0653459
(43) Date de publication de la demande: 27.02.2008
(73) Titulaire: PEUGEOT CITROËN AUTOMOBILES SA, 78140 Velizy-Villacoublay (FR)
(72) Inventeur: Bugna, Esteban, 70200 Lantenot (FR); Gleize, Philippe, 25600 Brognard (FR); Millet, Thierry, 90500 Beaucourt (FR)

(56) Documents cités:
- EP-A- 1 605 132
- DE-C1- 19 537 768
- DE-C1- 19 710 787
- US-A1- 2005 023 854

## Description

L'invention concerne principalement un panneau destiné à couvrir l'espace entre un dossier de siège arrière et un dispositif de recouvrement de compartiment à bagages.

L'invention concerne également un système cache bagage comprenant au moins un tel panneau.

Dans le domaine de la carrosserie automobile, est connu un système cache bagage constitué d'une part, d'un dispositif de recouvrement dans lequel est fixé un rideau souple monté mobile depuis une position enroulée à l'intérieur du dispositif jusqu'à une position déployée dans laquelle il s'étend longitudinalement jusqu'à proximité du hayon du véhicule, et d'autre part, d'un panneau solidairement fixé au dispositif au niveau de son bord avant et couvrant l'espace situé entre ce dispositif et le dossier de siège arrière.

Comme également connu, les dossiers de sièges sont généralement montés réglables entre une première position d'utilisation et une ou plusieurs positions inclinées et/ou reculées.

L'inconvénient du système précédemment décrit est qu'il n'est pas adapté pour que l'espace entre le dispositif et le dossier de siège soit totalement couvert par le panneau pour toutes les positions prises par ce dossier et en particulier pour les grands débattements.

Le but de l'invention est de remédier à cet inconvénient en proposant un panneau restant en contact permanent avec le dossier de siège quelque soit la position de ce dernier : un tel panneau est connu du document US 2005/0023854 A1.

A cet effet, l'invention concerne un panneau destiné à couvrir l'espace entre l'arrière d'un dossier de siège arrière et un dispositif de recouvrement de compartiment à bagages, le siège arrière étant déplaçable entre une position avant normale (A) et au moins une position arrière (B). Le panneau de l'invention est solidaire par son extrémité arrière audit dispositif de recouvrement et son extrémité avant est en appui glissant le long de la face arrière du dossier du siège mobile, en formant un angle α inférieur à 90° entre le panneau, au niveau de son extrémité avant, et la face d'appui du dossier de siège arrière.

Le panneau est articulé, à proximité de son extrémité arrière, autour d'un moyen d'articulation comprenant un axe transversal (Y2), entre une position (C) correspondant à la première position (A) du dossier jusqu'à une position (D) inclinée correspondant à la position (B) dudit dossier.

Le panneau comprend un volet arrière fixe et un volet avant monté pivotant sur le volet arrière, et autour de l'axe (Y2), entre la position (C) et la position (D) à l'encontre d'une force de rappel du moyen d'articulation.

Selon l'invention, le volet arrière et le volet avant sont montés pivotants l'un par rapport à l'autre autour de l'axe transversal (Y2) par des lamelles souples reliant les deux volets et réalisées en un matériau élastiquement déformable.

Selon une autre caractéristique de l'invention, chacune des lamelles est galbée sur sa largeur afin d'augmenter la force de retour du volet avant depuis sa position inclinée (D) jusqu'à sa première position (C).

Selon une autre caractéristique de l'invention, les lamelles souples sont disposées parallèlement l'une à l'autre et transversalement auxdits volets en étant régulièrement espacées les unes des autres sur toute la largeur des volets et le nombre de lamelles est fonction de la force de rappel souhaitée entre le volet arrière et le volet avant.

Selon une autre caractéristique de l'invention, le panneau est recouvert d'un revêtement d'habillage extérieur.

Selon une autre caractéristique de l'invention, l'extrémité arrière du panneau est solidairement fixée au dispositif de recouvrement par encliquetage dans une rainure.

Selon une autre caractéristique de l'invention, le volet arrière fixe est en appui sur une portion du dispositif de recouvrement.

L'invention concerne également un système cache bagage comprenant un panneau tel que décrit ci avant et un dispositif de recouvrement, telle qu'une cassette cache bagage, monté fixe dans le véhicule et dans lequel est fixé un rideau souple déroulable depuis une position d'enroulement (E) à l'intérieur de la cassette jusqu'à une position déployée (F) dans laquelle il s'étend longitudinalement à proximité du hayon du véhicule.

D'autres caractéristiques et avantages de la présente invention ressortiront de la description ci-après d'un mode de réalisation, la description étant faite en référence aux dessins annexés, donnés uniquement à titre d'exemple et sur lesquels :
- la figure 1 est une représentation schématique en coupe longitudinale d'un panneau de l'invention monté sur la cassette et représenté en traits pleins dans sa position C correspondant à une première position A du dossier et en traits mixtes dans sa position D correspondant à une deuxième position inclinée B du dossier selon un premier mode de réalisation ;
- la figure 2 est une vue agrandie de la figure 1 selon la flèche II ;
- la figure 3 est une vue schématique en coupe longitudinale du système de l'invention selon un deuxième mode de réalisation ;
- la figure 4 est une vue en perspective du dessous du panneau de l'invention ;
- la figure 5 est une vue agrandie selon la partie cerclée V de la figure 4 ;
- la figure 6 est une vue en perspective de la lamelle pointée VI sur la figure 5 ;
- la figure 7 est une vue en perspective de dessous du panneau de l'invention pourvu de son revêtement d'habillage extérieur et sur lequel les lamelles souples sont montrées en relief ;
- la figure 8 est une vue en perspective de dessous du système cache bagage de l'invention ;
- la figure 9 est une vue en perspective de dessus du système de la figure 8.

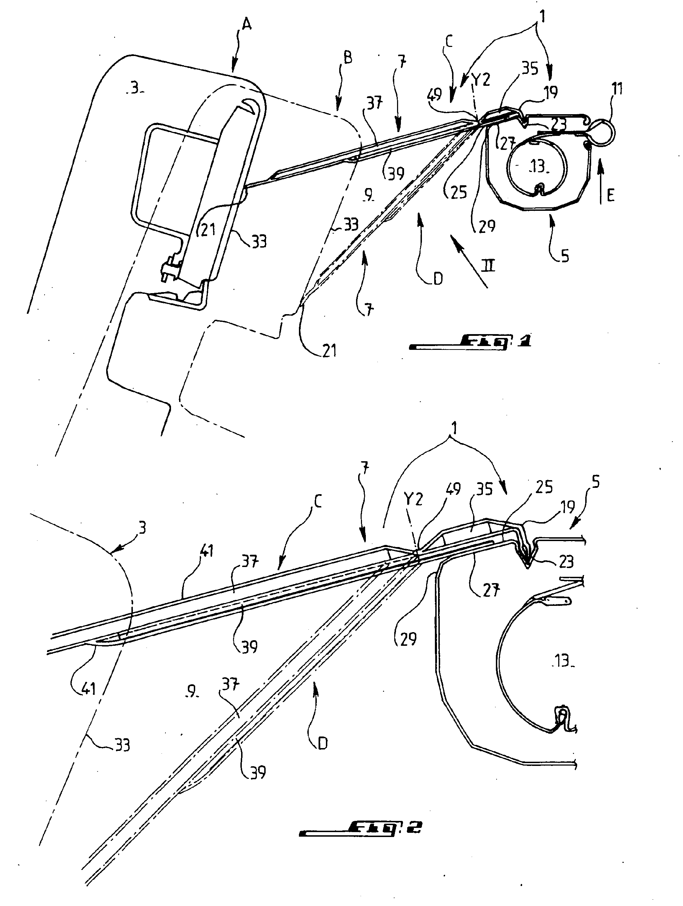

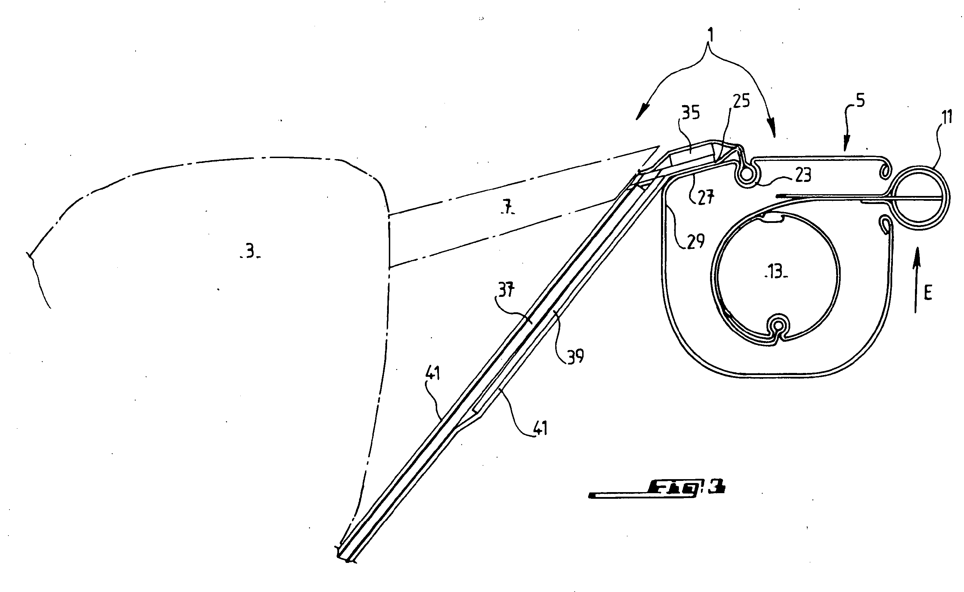

En référence aux figures 1 à 3, le système cache bagages 1 de l'invention destiné à équiper un véhicule automobile, comprend une cassette cache bagage 5 montée dans le coffre et sur laquelle est fixé un panneau articulé 7 selon l'invention qui couvre l'espace avant 9 du coffre entre la cassette 5 et le dossier 3 du siège arrière.

Généralement, le dossier 3 coopère avec une assise de siège correspondante, non représentée, pour permettre une utilisation normale du siège. Dans cette configuration, l'assise est horizontale et le dossier est dans une position d'utilisation A qui est montrée en traits pleins sur la figure 1 et qui est une position la plus avancée et la plus redressée dudit dossier 3.

Le siège et donc son dossier 3 est monté mobile en déplacement entre cette position A et une position B dans laquelle il est incliné par rapport à la position A, comme représenté sur les figures 1 et 2 en traits mixtes.

Le système cache bagage 1 comprend également la cassette cache bagage 5 qui est disposée transversalement sur toute la largeur du compartiment à bagage entre les parois latérales arrière du véhicule automobile, non représentées.

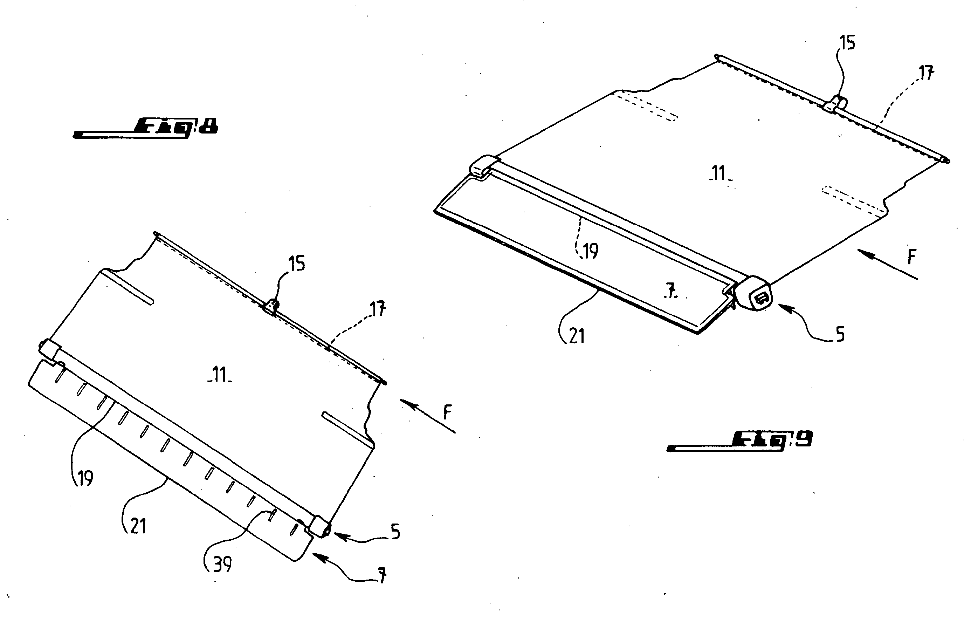

La cassette 5 comprend un rideau souple 11 monté mobile depuis une position d'enroulement E dans laquelle il est enroulé autour d'un enrouleur 13 et rangé dans la cassette 5, comme visible sur les figures 1 à 3, jusqu'à une position déployée F, dans laquelle il s'étend longitudinalement à proximité du hayon du véhicule, et où il remplit sa fonction de cache bagage, comme visible sur les figures 8 et 9.

Un moyen de préhension 15, tel qu'un anneau ou un crochet, est disposé sur le bord libre 17 du rideau souple 11 permettant de saisir ce rideau 11 pour le dérouler.

En revenant au panneau articulé 7 de l'invention, celui-ci est solidarisé au niveau de son extrémité arrière 19 à la cassette 5 par encliquetage dans une rainure 23 s'étendant le long de cette cassette 5.

Selon un premier mode de réalisation, visible sur les figures 1 et 2, la rainure 23 présente une forme en V, et selon un deuxième mode de réalisation, elle présente une forme en tube, l'extrémité arrière 19 du panneau 7 présente une forme complémentaire à celle de la rainure 23 pour permettre l'encliquetage.

La face inférieure 25 du panneau 7 vient en appui, au niveau de l'extrémité arrière 19 du panneau 7, le long d'une portion 27 de la cassette 5 qui est plane, s'étendant légèrement inclinée depuis la rainure 23 jusqu'au bord avant 29 de cette cassette 5.

L'extrémité avant 21 du panneau 7 est légèrement courbée vers le bas de façon à être en appui glissant le long de la face arrière 33 du dossier 3 en formant avec cette dernière un angle d'inclinaison, repéré par α sur la figure 1, qui est inférieur à 90° et peut prendre plusieurs valeurs prédéterminées en fonction de l'inclinaison du dossier 3.

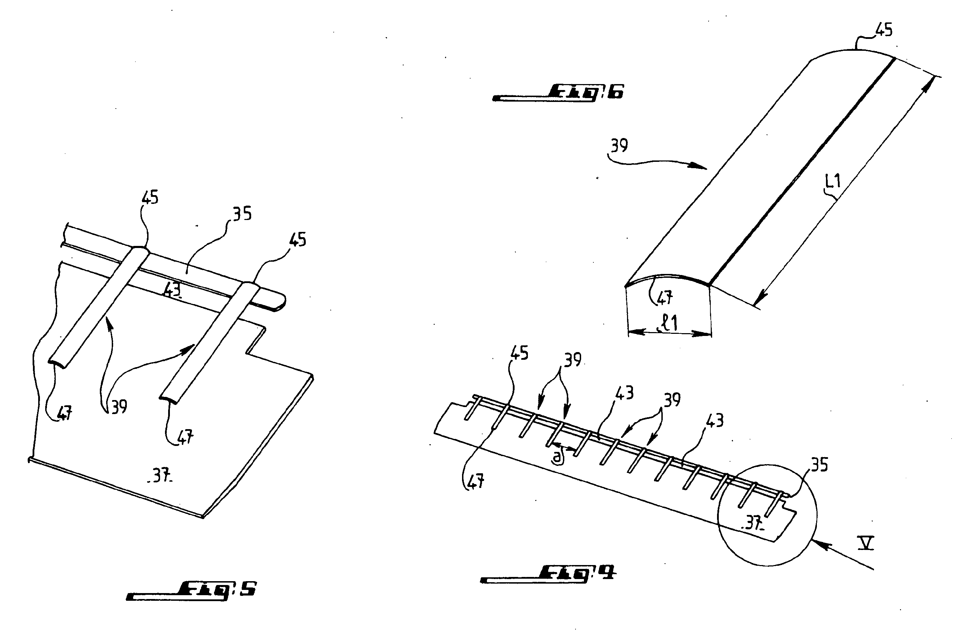

En référence aux figures 4 et 5, le panneau 7 est constitué d'un volet arrière 35 et d'un volet avant 37 reliés ensemble par une pluralité de lamelles souples identiques 39 disposées transversalement auxdits volets 35 et 37 et est couvert par un revêtement d'aspect 41 de panneau 7.

Le volet arrière 35 est fixe et est disposé au niveau de la portion 27 de la cassette 5 entre le bord avant 29 de la cassette 5 et la rainure 23. Ce volet arrière 35 a de petites dimensions et sert à solidariser le panneau 7 à la cassette cache bagage 5.

Le volet avant 37 a des dimensions nettement supérieures à celles du volet arrière 35 puisque c'est ce volet avant 37 qui couvre l'espace vide 9.

Le volet avant 37 est monté pivotant par rapport au volet arrière 35, à l'encontre d'une force de rappel des lamelles 39, depuis une première position C dans laquelle il se trouve en alignement avec le volet arrière 35 jusqu'à une position finale D dans laquelle il est incliné vers le bas par rapport à sa première position C, les positions C et D du volet avant 37 correspondent aux positions C et D du panneau 7.

Les lamelles souples 39 maintiennent les deux volets arrière 35 et avant 37 à proximité l'un de l'autre et séparés par un petit espace 43 tout en permettant leur alignement.

Le nombre de lamelles à positionner sur lesdits volets arrière 35 et avant 37 est fonction de la force de rappel souhaitée entre ces deux volets 35 et 37.

Par ailleurs, les lamelles souples 39 du panneau 7 sont disposées parallèlement entre elles en s'étendant selon la direction longitudinale depuis une première position où elles sont droites jusqu'à au moins une deuxième position où elles sont pliées, et sont régulièrement espacées les unes des autres d'une distance d sur toute la largeur des volets 35 et 37.

L'extrémité arrière 45 de chaque lamelle 39 est solidarisée au volet arrière 35, et une partie de la lamelle au niveau de son extrémité avant 47 est solidarisée au volet avant 37.

Chaque lamelle 39 est une pièce mémorisant sa forme initiale et est réalisée en un matériau élastiquement déformable adéquat, par exemple métallique.

Comme visible sur la figure 6, chaque lamelle 39 a une forme rectangulaire et présente une longueur L1 supérieure à sa largeur 11, par exemple, une longueur L1 de 80 millimètres et une largeur 11 de 13 millimètres, ainsi qu'une très faible épaisseur.

La lamelle souple 39 est légèrement galbée dans le sens de sa largeur 11. La forme galbée de la lamelle 39 permet à cette lamelle 39 d'augmenter sa force de retour en position initiale.

Etant solidaires du volet avant 37, les lamelles 39 de par leur souplesse et leur forme galbée permettent de rappeler élastiquement et automatiquement le volet avant 37 lorsque aucun effort provenant de l'inclinaison du dossier 3 n'est appliqué audit volet 37.

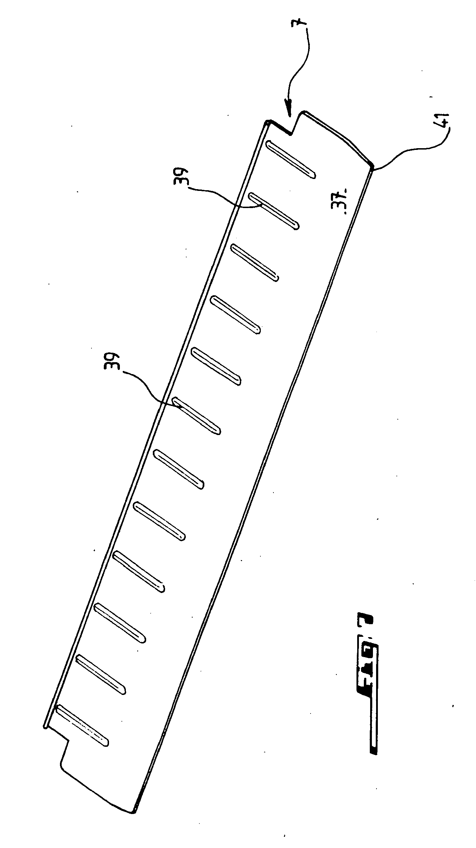

Les lamelles souples 39 sont fixées sur le panneau 7 en étant emprisonnées entre le revêtement d'aspect 41 et lesdits volet arrière 35 et avant 37 du panneau 7, comme visible sur la figure 7.

Le revêtement 41 présente une zone de pincement 49 entre lesdits volet arrière 35 et volet avant 37, au niveau de l'axe transversal Y2, et est réalisé en un matériau suffisamment rigide de manière à permettre la formation des extrémités avant 31 et arrière 32 du panneau 7 d'une part, et de bien maintenir les lamelles souples 39 en appui contre les volets 35 et 37 d'autre part.

Sur la figure 7, le panneau 7 muni de son revêtement 41 est montré, et les lamelles 39 sont visibles en relief sous la face inférieure 25 du panneau 7. Elles sont disposées proches de l'extrémité arrière 19 du panneau 7 en s'étendant sur toute la largeur dudit panneau 7 au niveau de sa face inférieure 25.

Le fonctionnement du système cache bagage 1 selon l'invention est comme suit.

En position normale d'utilisation A du dossier 3, le panneau 7 repose sur la face arrière 33 du dossier 3 (position C) .

Lorsque le dossier 3 est incliné (position B), il entraîne dans son mouvement l'extrémité avant 21 du panneau 7, et donc le volet 37 va glisser vers le bas le long de cette face arrière 33 d'appui, en forçant les lamelles souples 39 à se déformer en se pliant au niveau de cet axe Y2.

Lorsque le dossier de siège 3 revient à sa position initiale A, l'effort n'étant plus appliqué sur l'extrémité avant 21 du panneau 7, et donc le volet avant 37 revient à sa position initiale C automatiquement, grâce à la force de rappel des lamelles souples 39.

Par conséquent, les volets arrière 35 et avant 37 reviennent à leur position initiale et sont à nouveau en alignement l'un par rapport à l'autre.

Ainsi, quelque soit la position du dossier 3, il n'y a pas de discontinuité de recouvrement de l'espace avant 9 de coffre entre la cassette 5 et le dossier 3.

L'invention s'applique également au cas où le dossier de siège 3 recule, faisant glisser vers le bas l'extrémité avant 21 du panneau 7. Lorsque le dossier 3 revient à sa position initiale A, les lamelles 39 ramènent le panneau 7 dans sa position initiale C.

Dans ce qui précède, le système cache bagage 1 comprend un seul siège arrière. Dans le cas de plusieurs sièges arrière indépendants, c'est le siège le plus en arrière, ou le plus reculé, qui pilote l'inclinaison du panneau articulé 7.

Le système cache bagage 1 offre l'avantage de permettre au panneau 7 de rester en contact avec le dossier 3 du siège arrière quelle que soit la position de réglage de ce dossier, et ce, malgré les dispersions dimensionnelles de tous les éléments.

De plus, les lamelles souples 39 ne se fatiguent pas dans le temps. Ainsi, il n'y a pas de risque de détérioration du panneau articulé 7 dans le cas de mauvaises manipulations du dossier 3 grâce à la souplesse des lamelles 39 qui jouent le rôle de « fusibles » en acceptant les pliages sans détérioration.

Le panneau articulé 7 selon l'invention est simple de fabrication puisqu'il ne comprend que très peu d'éléments. Grâce à cette simplicité, il est possible de standardiser cette fabrication.

## Revendications

1. Panneau (7) destiné à couvrir l'espace entre l'arrière d'un dossier (3) de siège arrière et un dispositif de recouvrement (5 ; 11) de compartiment à bagages, le siège arrière étant déplaçable entre une position avant normale (A) et au moins une position arrière (B), le panneau (7) étant solidaire par son extrémité arrière (19) dudit dispositif de recouvrement (5 ; 11) et son extrémité avant (21) étant en appui glissant le long de la face arrière (33) du dossier de siège (3) mobile, en formant un angle α inférieur à 90° entre le panneau (7), au niveau de son extrémité avant (21), et la face d'appui (33) du dossier (3) de siège arrière, le panneau (7) comprenant un volet arrière fixe (35) et un volet avant (37) monté pivotant sur le volet arrière (35), et autour de l'axe (Y2), entre la position (C) et la position (D) à l'encontre d'une force de rappel du moyen d'articulation (39), **caractérisé en ce que** le volet arrière (35) et le volet avant (37) sont montés pivotants l'un par rapport à l'autre autour de l'axe transversal (Y2) par des lamelles souples (39) reliant les deux volets (35, 37) et réalisées en un matériau élastiquement déformable.

2. Panneau (7) selon la revendication 1, **caractérisé en ce qu'**il est articulé, à proximité de niveau de son extrémité arrière (19), autour d'un moyen d'articulation (39) comprenant un axe transversal (Y2) entre une position (C) correspondant à la première position (A) du dossier (3) jusqu'à une position (D) inclinée correspondant à la position (B) dudit dossier (3).

3. Panneau (7) selon la revendication 1 ou 2, **caractérisé en ce que** chacune des lamelles (39) est galbée sur sa largeur afin d'augmenter la force de rappel du volet avant (37) depuis sa position inclinée (D) jusqu'à sa première position (C).

4. Panneau (7) selon l'une quelconque des revendications précédentes, **caractérisé en ce que** les lamelles souples (39) sont disposées parallèlement l'une à l'autre et transversalement auxdits volets (35, 37) en étant régulièrement espacées les unes des autres sur toute la largeur des volets (35, 37) et **en ce que** le nombre de lamelles est fonction de la force de rappel souhaitée entre le volet arrière (35) et le volet avant (37).

5. Panneau (7) selon l'une quelconque des revendications 1 à 4, **caractérisé en ce qu'**il est recouvert d'un revêtement d'aspect de panneau (41).

6. Panneau (7) selon l'une quelconque des revendications 1 à 4, **caractérisé en ce que** l'extrémité arrière (19) du panneau (7) est solidairement fixée au dispositif de recouvrement (5) par encliquetage dans une rainure (23).

7. Panneau (7) selon l'une quelconque des revendications précédentes, **caractérisé en ce que** le volet arrière fixe (35) est en appui sur une portion (27) du dispositif de recouvrement (5).

8. Système cache bagage (1) **caractérisé en ce qu'**il comprend un panneau (7) selon l'une quelconque des revendications 1 à 7, et également un dispositif de recouvrement (5 ; 11), telle qu'une cassette cache bagage (5), monté fixe dans le véhicule et dans lequel est fixé un rideau souple (11) déroulable depuis une position de rangement (E) à l'intérieur de la cassette (5) jusqu'à une position déployée (F) dans laquelle il s'étend longitudinalement à proximité du hayon du véhicule.

## Claims

1. Panel (7) intended to cover the space between the rear of a backrest (3) of a rear seat and a covering device (5; 11) of the luggage compartment, the rear seat being displaceable between a normal front position (A) and at least one rear position (B), the panel (7) being integral by its rear end (19) with the said covering device (5; 11) and its front end (21) resting in a sliding manner along the rear face (33) of the movable seat backrest (3), forming an angle α less than 90° between the panel (7), at the level of its front end (21), and the support face (33) of the rear seat backrest (3), the panel (7) comprising a fixed rear flap (35) and a front flap (37) pivotably mounted on the rear flap (35), and around the axis (Y2), between the position (C) and the position (D) contrary to a restoring force of the articulation means (39), **characterized in that** the rear flap (35) and the front flap (37) are pivotably mounted one with respect to the other about the transverse axis (Y2) by flexible plates (39) connecting the two flaps (35, 37) and made of an elastically deformable material.

2. Panel (7) according to Claim 1, **characterized in that** it is articulated close to the level of its rear end (19) about an articulation means (39) comprising a transverse axis (Y2) between a position (C) corresponding to the first position (A) of the backrest (3) up to an inclined position (D) corresponding to the position (B) of the said backrest (3).

3. Panel (7) according to Claim 1 or 2, **characterized in that** each of the plates (39) is curved over its width so as to increase the restoring force of the front flap (37) from its inclined position (D) up to its first position (C).

4. Panel (7) according to any one of the preceding claims, **characterized in that** the flexible plates (39) are arranged parallel to each other and transversely to the said flaps (35, 37), being regularly spaced with respect to each other over the entire width of the flaps (35, 37) and **in that** the number of plates is a function of the desired restoring force between the rear flap (35) and the front flap (37).

5. Panel (7) according to any one of Claims 1 to 4, **characterized in that** it is covered by a facing of panel appearance (41).

6. Panel (7) according to any one of Claims 1 to 4, **characterized in that** the rear end (19) of the panel (7) is integrally fixed to the covering device (5) by detenting in a groove (23).

7. Panel (7) according to any one of the preceding claims, **characterized in that** the rear fixed flap (35) rests on a portion (27) of the covering device (5).

8. Luggage concealing system (1) **characterized in that** it comprises a panel (7) according to any one of Claims 1 to 7, and also a covering device (5; 11), such as a luggage concealing compartment (5), fixedly mounted in the vehicle and in which there is fixed a flexible curtain (11) which is able to be unrolled from a storage position (E) inside the compartment (5) up to a deployed position (F) in which it extends longitudinally close to the tailgate of the vehicle.

## Patentansprüche

1. Platte (7), die dazu bestimmt ist, den Raum zwischen der Rückseite einer Rücksitzrückenlehne (3) und einer Gepäckraum-Abdeckvorrichtung (5; 11) abzudecken, wobei der Rücksitz zwischen einer normalen vorderen Position (A) und mindestens einer hinteren Position (B) verstellt werden kann, wobei die Platte (7) über ihr hinteres Ende (19) fest mit der Abdeckvorrichtung (5; 11) verbunden ist, und wobei ihr vorderes Ende (21) entlang der Rückseite (33) der beweglichen Sitzrückenlehne (3) gleitend in Auflage ist, indem zwischen der Platte (7) auf dem Niveau ihres vorderen Endes (21) und der Auflageseite (33) der Rückenlehne (3) des Rücksitzes ein Winkel α gebildet wird, der kleiner ist als 90 Grad, wobei die Tafel (7) eine stationäre hintere Klappe (35) und eine vordere Klappe (37) aufweist, welche auf der hinteren Klappe (35) und um eine Achse (Y2) zwischen der Position (C) und der Position (D) gegen eine Rückholkraft des Anlenkmittels (39) schwenkend befestigt ist, **dadurch gekennzeichnet, dass** die hintere Klappe (35) und die vordere Klappe (37) zueinander um die Querachse (Y2) durch biegsame Federn (39), welche die zwei Klappen (35, 37) verbinden und die aus einem elastisch verformbaren Werkstoff hergestellt sind, schwenkend montiert sind.

2. Platte (7) nach Anspruch 1, **dadurch gekennzeichnet, dass** sie in der Nähe des Niveaus ihres hinteren Endes (19) um ein Anlenkmittel (39), welches eine Querachse (Y2) aufweist, zwischen einer Position (C), die der ersten Position (A) der Rückenlehne (3) entspricht, bis zu einer schrägen Position (D), die der Position (B) der Rückenlehne (3) entspricht, angelenkt ist.

3. Platte (7) nach Anspruch 1 oder 2, **dadurch gekennzeichnet, dass** jede der Federn (39) auf ihrer Breite gewölbt ist, um die Rückholkraft der vorderen Klappe (37) aus ihrer schrägen Position (D) bis zu ihrer ersten Position (C) zu erhöhen.

4. Platte (7) nach einem der vorhergehenden Ansprüche, **dadurch gekennzeichnet, dass** die biegsamen Federn (39) parallel zueinander und quer zu den Klappen (35, 37) regelmäßig beabstandet zueinander auf der ganzen Breite der Klappen (35, 37) angeordnet sind, und dass die Anzahl der Federn von der gewünschten Rückholkraft zwischen der hinteren Klappe (35) und der vorderen Klappe (37) abhängt.

5. Platte (7) nach einem der Ansprüche 1 bis 4, **dadurch gekennzeichnet, dass** sie mit einer Beschichtung mit Tafelaussehen (41) abgedeckt ist.

6. Platte (7) nach einem der Ansprüche 1 bis 4, **dadurch gekennzeichnet, dass** das hintere Ende (19) der Platte (7) fest an der Abdeckvorrichtung (5) durch Einrasten in eine Rille (23) befestigt ist.

7. Platte (7) nach einem der vorhergehenden Ansprüche, **dadurch gekennzeichnet, dass** die stationäre hintere Platte (35) auf einem Abschnitt (27) der Abdeckvorrichtung (5) aufliegt.

8. Gepäckabdecksystem (1), **dadurch gekennzeichnet, dass** es eine Platte (7) nach einem der Ansprüche 1 bis 7 aufweist und auch eine Abdeckvorrichtung (5; 11), wie zum Beispiel eine Gepäckabdeckkassette (5), die in dem Fahrzeug stationär montiert ist, und in der ein biegsamer Vorhang (11) befestigt ist, der ausgehend von einer Verstauposition (E) in Inneren der Kassette (5) bis zu einer aufgebreiteten Position (F), in der er sich längs in der Nähe der Heckklappe des Fahrzeugs erstreckt, abgerollt werden kann.
